(19) Europäisches Patentamt
European Patent Office
Office européen des brevets

(11) **EP 3 160 036 B1**

(12) **EUROPEAN PATENT SPECIFICATION**

(45) Date of publication and mention
of the grant of the patent:
**25.11.2020 Bulletin 2020/48**

(51) Int Cl.:
*H02P 21/00* *(2016.01)*     *H02P 21/36* *(2016.01)*
*H02P 1/02* *(2006.01)*

(21) Application number: **16193668.7**

(22) Date of filing: **13.10.2016**

(54) **POWER CONVERSION APPARATUS**

STROMUMWANDLUNGSVORRICHTUNG

APPAREIL DE CONVERSION DE PUISSANCE

(84) Designated Contracting States:
**DE GB IT**

(30) Priority: **14.10.2015 JP 2015202810**

(43) Date of publication of application:
**26.04.2017 Bulletin 2017/17**

(73) Proprietor: **Hitachi, Ltd.**
**Chiyoda-ku,**
**Tokyo 100-8280 (JP)**

(72) Inventors:
• **Kojima, Tetsuo**
**Tokyo 1008280 (JP)**
• **Sugiura, Tetsu**
**Tokyo 1008280 (JP)**

(74) Representative: **Mewburn Ellis LLP**
**Aurora Building**
**Counterslip**
**Bristol BS1 6BX (GB)**

(56) References cited:
**EP-A2- 2 498 393     EP-A2- 2 645 562**
**DE-A1- 19 503 658**

• **JINSHENG JIANG ET AL: "An Efficient Braking Method for Controlled AC Drives With a Diode Rectifier Front End", IEEE TRANSACTIONS ON INDUSTRY APPLICATIONS, IEEE SERVICE CENTER, PISCATAWAY, NJ, US, vol. 37, no. 5, 1 September 2001 (2001-09-01), XP011023038, ISSN: 0093-9994**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

Field of the Invention

The present invention relates to a power conversion apparatus that drives an induction motor.

Description of the Related Art

In the field of railway vehicles, induction motors are generally used as motors for driving vehicles. Railway vehicles have a plurality of motors installed within a train formation, and even if the whole vehicle is running at the same speed, the rotational speed of the motors may not be the same, depending on the difference in rotational radii of the wheels. If a synchronous motor is used, it is necessary to synchronize a rotational frequency of a rotor and a drive frequency of a power conversion apparatus, so that a power conversion apparatus must be provided to each motor. On the other hand, if an induction motor is used, a torque occurs according to the difference between the drive frequency and the rotational speed of the rotor, so that a rotational speed difference of the motor is permissible within a permissible range of torque error. Therefore, in the field of railway vehicles, a method of driving a plurality of induction motors with a single power conversion apparatus is generally adopted, and the system can be formed at a low cost.

Motors used in major industries are often continuously operated at a fixed rotational speed, but in the field of railway vehicles, the power conversion apparatus is started in a state where the vehicle is stopped, and after the vehicle is accelerated, the operation of the power conversion apparatus is stopped and the vehicle is transited to a state where it runs by inertia. Thereafter, the power conversion apparatus is restarted and the vehicle is decelerated or reaccelerated. As described, the vehicle is frequently accelerated and decelerated, and the power conversion apparatus is started and stopped repeatedly. If an induction motor is used, even if the power conversion apparatus is stopped and the primary current is cutoff, current continues to flow within the induction motor for a while. The current is consumed by the resistance within the motor and gradually attenuated, but while it disappears, magnetic flux will continue to occur by the current flowing within the induction motor. In that state, if the power conversion apparatus is restarted while there is much residual magnetic flux, that is, while the magnetic energy residing in the motor is still high, excessive current may flow. The excessive current may cause damage to the power conversion apparatus, or cause excessive torque to occur, deteriorating the ride quality.

This problem caused by the residual magnetic flux during re-startup has been known, and Japanese Unexamined Patent Application Publication No. 2013-207954 (Patent Document 1) and Japanese Unexamined Patent Application Publication No. 2008-113501 (Patent Document 2) disclose known measures against this problem. The art disclosed in Patent Document 1 sets an output voltage to zero before stopping the power conversion apparatus, so that a primary side of the induction motor is shorted, and a residual magnetic energy within the motor is drawn out to the primary side. The art disclosed in Patent Document 2 controls an excitation current to attenuate a magnetic flux inside a motor before the power conversion apparatus is stopped, so that the residual magnetic energy within the motor can be sufficiently reduced.

Jiang & Holtz, IEEE Trans. Indust. Applic., 37 (5), 1299 - 1307 (2001) propose a braking method for controlled AC drives with a diode rectifier front end.

SUMMARY OF THE INVENTION

The art taught in Patent Document 1 operates the power conversion apparatus in a state where output voltage is set to zero prior to stopping the power conversion apparatus, so as to short the primary side of the induction motor and draw out the residual magnetic energy within the motor toward the primary side, but if the residual magnetic energy is high, the current flowing to the primary side also becomes high, and excessive torque may occur.

The art disclosed in Patent Document 2 controls the excitation current to attenuate the magnetic flux within the motor before stopping the power conversion apparatus, to thereby sufficiently reduce the residual magnetic energy within the motor. According to the disclosure, the system is designed to be sensor-less, without a magnetic flux sensor, but the system uses a value estimated based on a motor constant, so that if the constant is varied due to the variation of temperature of the motor, estimation error is increased, and magnetic flux cannot be attenuated sufficiently.

Based on the above description, the present invention aims at solving the following three problems.

(1) To prevent excessive current and torque from occurring during subsequent startup.
(2) To prevent excessive current and torque from occurring in attenuating the magnetic flux sufficiently before stopping the power conversion apparatus.
(3) To attenuate the magnetic flux sufficiently without a magnetic sensor, even if temperature variation or constant variation of the motor occurs.

In order to solve the above-mentioned problems, a power conversion apparatus according to claim 1 is provided.

According to the present invention, the magnetic flux can be attenuated sufficiently when stopping the operation of the motor, and the occurrence of excessive current and torque during the subsequent startup can be prevented. Further, excessive current and torque will not occur when the magnetic flux is attenuated prior to stopping the power conversion apparatus. Further, the present invention enables to attenuate the magnetic flux sufficiently even when temperature variation or constant variation of the motor occurs, without providing a magnetic sensor.

BRIEF DESCRIPTION OF THE DRAWINGS

FIG. 1 is a view illustrating a configuration of an embodiment of a power conversion apparatus according to the present invention.

FIG. 2 is a view illustrating a detail of a voltage operation part within a control unit.

FIG. 3 is a view illustrating an operating waveform of respective commands of the power conversion apparatus according to the present invention.

FIG. 4 is a view illustrating a detail of an on/off operation of a power converter (corresponding to a single phase).

FIG. 5 is a view illustrating an operating waveform of a voltage / current command of a single phase (U phase) according to a prior art.

FIG. 6 is a view illustrating an operating waveform of a voltage / current command of a single phase (U phase) in a voltage operation part within the control unit.

FIG. 7 is a view illustrating an operating waveform of commands and state quantities according to the prior art.

FIG. 8 is a view illustrating an operating waveform of commands and state quantities of the power conversion apparatus according to the present invention.

FIG. 9 is a view comparing a relationship between size and speed of residual magnetic flux according to the prior art and the present invention.

FIG. 10 is a view comparing a relationship between size and speed of residual magnetic flux and temperature according to the prior art and the present invention.

DETAILED DESCRIPTION OF THE PREFERRED EMBODIMENTS

Now, an embodiment of a power conversion apparatus, especially suitable for application to the field of railway vehicles, will be described with reference to the drawings as an embodiment of the present invention. Of course, the power conversion apparatus according to the present invention is not restricted to be used in railway vehicles, and it can be applied for use in general industries. Embodiment

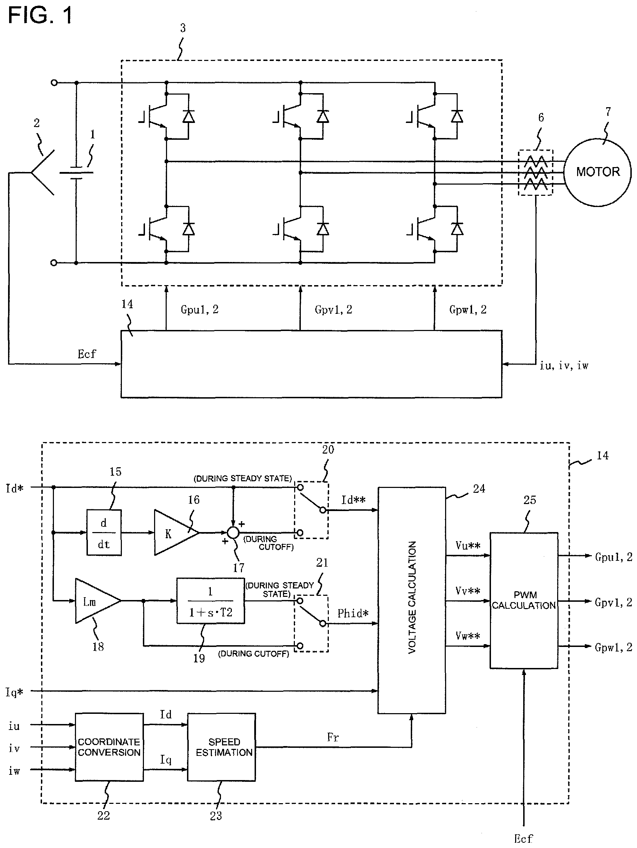

FIG. 1 is a view illustrating a configuration of an embodiment of a power conversion apparatus according to the present invention.

The power conversion apparatus according to the present invention is composed of a smoothing capacitor 1 smoothing a DC voltage supplied from an external DC power supply, a DC voltage sensor 2 detecting a DC voltage Ecf of the smoothing capacitor 1, a power converter 3 connected in parallel with the smoothing capacitor 1 and converting the DC voltage of the smoothing capacitor 1 to AC voltage, an induction motor 7 driven by an AC voltage supplied by the power converter 3, an AC current sensor 6 detecting AC currents iu, iv and iw output from the power converter 3, and a control unit 14 receiving the output of the DC voltage sensor 2 and the output of the AC current sensor 6 as input signals and outputting gate pulses Gpu1 and 2, Gpv1 and 2 and Gpw1 and 2 driving the power converter 3.

The control unit 14 is composed of a differentiator 15 acquiring a time differential value of a d-axis current command Id* given from the exterior, a first gain 16 multiplying an output of the differentiator 15 by a constant K, an adder 17 adding the d-axis current command Id* and the output of the first gain 16, a second gain 18 multiplying the d-axis current command Id* by a constant (in this case, an excitation inductance Lm), a low pass filter 19 providing a primary delay processing to the output of the second gain 18, a first selection switch 20 selecting the d-axis current command Id* during the steady state and selecting the output of the adder 17 during cutoff, a second selection switch 21 selecting the output of the low pass filter 19 during the steady state and selecting the output of the second gain 18 during cutoff, a rotating coordinate conversion part 22 receiving the AC currents iu, iv and iw detected by the AC current sensor 6 as input signals and converting them into a d-axis current Id and a q-axis current Iq, a speed estimation part 23 receiving the output Id and Iq of the rotating coordinate conversion part 22 as input signals and estimating a rotor rotation frequency (that is, the rotational speed) of the induction motor 7, a voltage operation part 24 receiving an output Id** (d-axis current command after correction) of the first selection switch 20, an output Phid* (d-axis flux command) of the second selection switch 21, a q-axis current command Iq* given from the exterior and an output Fr (rotor frequency estimation value) of the speed estimation part 23 as input signals and outputting AC voltage commands Vu**, Vv** and Vw**, and a PWM operation part 25 receiving the outputs Vu**, Vv** and Vw** of the voltage operation part 24 and the DC voltage Ecf detected by the DC voltage sensor 2 as input signals and outputting the gate pulses Gpu1 and 2, Gpv1 and 2 and Gpw1 and 2 driving the power converter 3. The steady state and the state during cutoff will be described later.

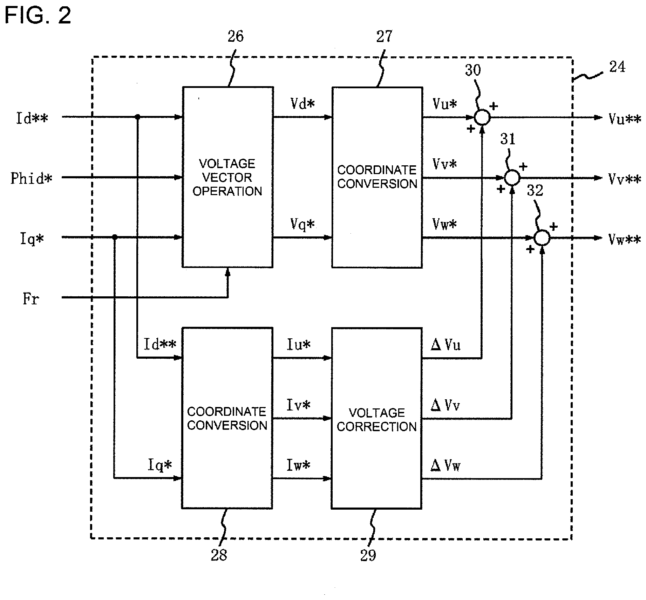

FIG. 2 is a view illustrating the details of the voltage operation part 24 provided in the control unit 14 of FIG. 1.

The voltage operation part 24 is composed of a voltage vector operation part 26 receiving a d-axis current command Id** after correction, the d-axis flux command Phid*, the q-axis current command Iq* and a rotor frequency estimation value Fr as input signals and outputting a d-axis voltage command Vd* and a q-axis voltage command Vq*, a first stationary coordinate conversion part 27 receiving the outputs Vd* and Vq* of the voltage vector operation part 26 as input signals and outputting three-phase AC current commands Vu*, Vv* and Vw*, a second stationary coordinate conversion part 28 receiving the d-axis current command Id** and the q-axis current command Iq* as input signals and outputting the three-phase AC current commands Iu*, Iv* and Iw*, a voltage correction part 29 receiving the outputs Iu*, Iv* and Iw* of the second stationary coordinate conversion part 28 as input signals and outputting three-phase AC voltage correction quantities ΔVu, ΔVv and ΔVw, and adders 30, 31 and 32 for calculating a sum of the outputs Vu*, Vv* and Vw* of the first stationary coordinate conversion part 27 and the outputs ΔVu, ΔVv and ΔVw of the voltage correction part 29. The outputs of the adders 30, 31 and 32 corresponding to the output of the voltage operation part 24 are set as the AC voltage commands Vu**, Vv** and Vw** after correction.

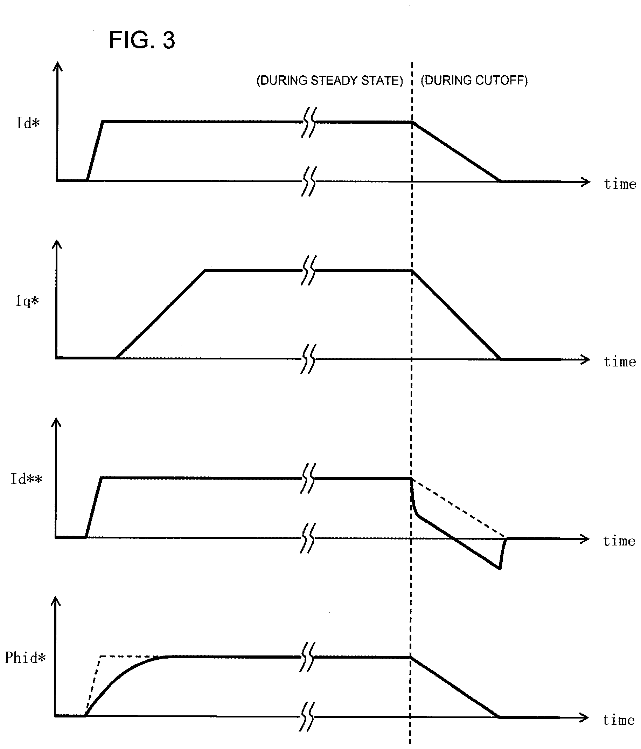

FIG. 3 is a view illustrating operating waveforms of respective commands of the power conversion apparatus according to the present invention.

The term "during steady state" refers to a state from starting of the d-axis current command Id* and the q-axis current command Iq* (during startup) to reaching of a steady state where the values have become a fixed value. The command during steady state corresponds to a case where both the first selection switch 20 and the second selection switch 21 in the control unit 14 of FIG. 1 are set to "(during steady state)". The d-axis current command Id** after correction becomes the same value as the d-axis current command Id*. The d-axis flux command Phid* is obtained by multiplying the d-axis current command Id* by the excitation inductance Lm, and subjecting the value to primary delay processing of a secondary time constant T2.

The term "during cutoff" refers to a state from lowering of the d-axis current command Id* and the q-axis current command Iq* to the state where the commands reach zero. Time variation of current should be minimized in order to suppress the torque shock occurring during cutoff. In other words, the d-axis current command Id* and the q-axis current command Iq* are lowered to zero during the same amount of time, so as to attenuate the current command by taking much time as possible.

The command during cutoff corresponds to a case where both the first selection switch 20 and the second selection switch 21 of the control unit 14 of FIG. 1 are set to "(during cutoff)". The d-axis magnetic flux command Phid* is set to a value obtained by simply multiplying the d-axis current command Id* by the excitation inductance Lm. The d-axis current command Id** after correction is a value obtained by multiplying a time variation (d/dt) of the d-axis current command Id* by a secondary time constant K of the induction motor and adding the value to the d-axis current command Id*. Thereby, the d-axis current command Id* is uniformly reduced during cutoff, according to which the time variation is fixed to a negative value, so that the d-axis current command Id** after correction has a shape having moved the d-axis current command Id* in parallel to the negative side.

Next, we will describe the problems during cutoff according to the prior art.

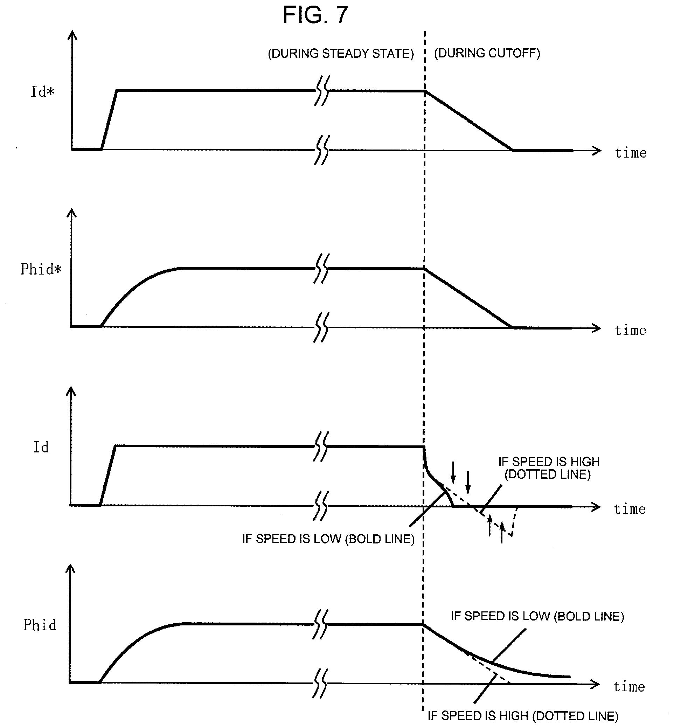

FIG. 7 illustrates an operating waveform of commands and state quantities according to the art disclosed in Patent Document 1, which is one example of the prior art.

In FIG. 7, during cutoff, the d-axis current command Id* is uniformly reduced, and the d-axis flux command Phid* is also similarly reduced. In the art taught in Patent Document 1, in comparison to the d-axis current command Id*, the d-axis flux command Phid* is subjected to primary delay processing by a primary time constant of the induction motor, but the primary time constant of the induction motor is approximately one-several tens of the secondary time constant, which is small enough to ignore in the timescale of FIG. 7.

In the art taught in Patent Document 1, in a high speed area, the d-axis current Id has a shape having moved the d-axis current command Id* in parallel to the negative side, and an actual d-axis magnetic flux Phid can be attenuated uniformly according to the d-axis flux command Phid* (dotted line portion of Phid of FIG. 7). However, in a low speed area, the d-axis current Id sticks to zero (drops to zero and will not flow) in midway of the cutoff, and thereafter, it will not even flow to the negative side. As a result, the d-axis magnetic flux Phid cannot be attenuated sufficiently (bold line portion of FIG. 7).

Now, the reason why the technique taught in Patent Document 1 cannot sufficiently reduce the residual magnetic flux in the low speed area will be described with reference to the drawings.

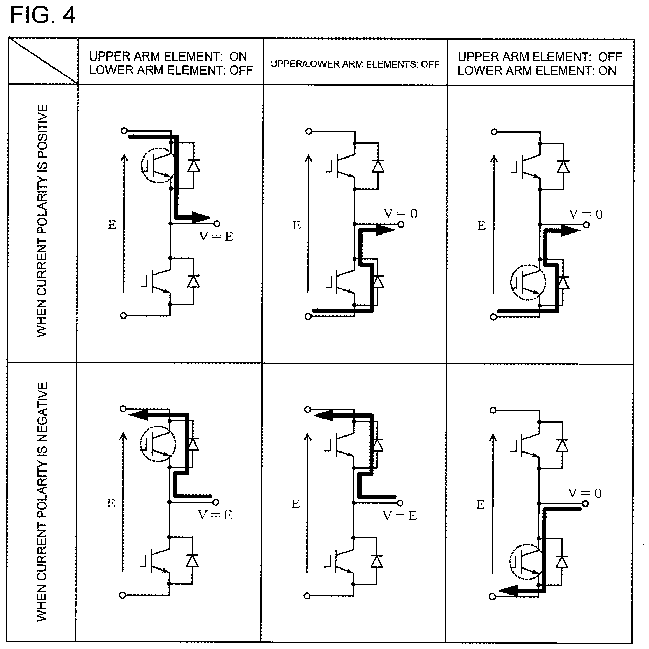

FIG. 4 is a view illustrating the details of on-off operation corresponding to one phase of the power converter 3, and it corresponds to one phase of a two-level three-phase inverter using a general switching element. A switching element composing an upper arm by arranging two switching elements in series (hereinafter referred to as "upper arm element") connects a positive potential of the power supply voltage and a load side. A switching element constituting a lower arm (hereinafter referred to as a "lower arm element") connects a negative potential of the power supply voltage and a load side. In FIG. 4, an IGBT and a diode connected in reverse parallel therewith are combined, and assumed as a single switching element.

If both the upper and lower arm elements are turned on at the same time, since the internal impedance of the switching element is extremely small, an enormous current flows through the upper and lower arm elements, and causes element destruction (referred to as "arm short-circuit fault"). Therefore, the switching timing must be managed so that the upper and lower arm elements are not turned on at the same time. Thus, the following three types of states are enabled as the circuit conduction state.

(1) Upper arm element: On, Lower arm element: Off
(2) Upper arm element: Off, Lower arm element: On
(3) Upper and lower arm elements: Off

Since there are two current polarities, positive and negative, as illustrated in FIG. 4, a combination of 3 by 2 equals 6 states exist. In the present description, the direction of the current polarity flowing from the power converter to the load is referred to as positive.

(1) In a state where the upper arm element is on and the lower arm element is off:
In a state where the upper arm element is on, the lower arm element is off and the current polarity is positive, the current flows from the positive polarity side of the DC power supply through the IGBT side of the upper arm element and reaches the load side. A potential V of the load side terminal of the power converter becomes a positive potential E of the DC power supply.

In a state where the upper arm element is on, the lower arm element is off and the current polarity is negative, the current flows from the load side through the diode side of the upper arm element and reaches the positive electrode side of the DC power supply. A potential V of the load side terminal of the power converter becomes a positive potential E of the DC power supply.

(2) In a state where the upper arm element is off and the lower arm element is on:
In a state where the upper arm element is off, the lower arm element is on and the current polarity is positive, the current flows from the negative polarity side of the DC power supply through the diode side of the lower arm element and reaches the load side. The potential V of the load side terminal of the power converter becomes a negative potential 0 of the DC power supply.

In a state where the upper arm element is off, the lower arm element is on and the current polarity is negative, the current flows from the load side through the IGBT side of the lower arm element and reaches the negative polarity side of the DC power supply. The potential V of the load side terminal of the power converter becomes a negative potential 0 of the DC power supply.

(3) In a state where both the upper and lower arm elements are off:
In a state where the upper arm element is off, the lower arm element is off and the current polarity is positive, the current flows from the negative polarity side of the DC power supply through the diode side of the lower arm element and reaches the load side. The potential V of the load side terminal of the power converter becomes a negative potential 0 of the DC power supply.

In a state where the upper arm element is off, the lower arm element is off and the current polarity is negative, the current flows from the load side through the diode side of the upper arm element and reaches the positive electrode side of the DC power supply. The potential V of the load side terminal of the power converter becomes a positive potential E of the DC power supply.

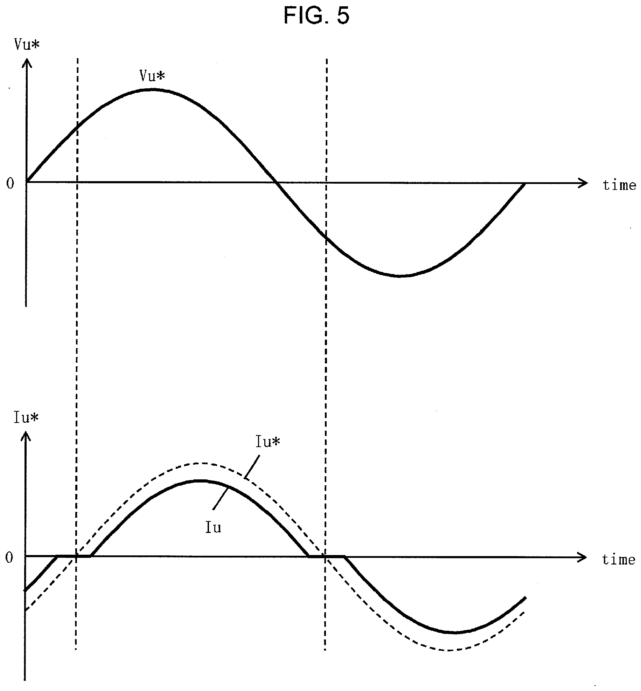

At this time, if either one of the upper or lower arm element is on, the potential V of the load side terminal of the power converter can be acquired, regardless of the current polarity. However, if both the upper and lower arm elements are off, the potential V of the load side terminal of the power converter depends on the polarity of the current. That is, if the current polarity is positive, the potential of the load side terminal is set to negative potential 0 of the DC power supply, so that the current is reduced, while on the other hand, if the current polarity is negative, the potential of the load side terminal is set to positive potential E of the DC power supply, and the current increases (refer to the solid line waveform referring to Iu of FIG. 5 described later). Thereby, the output voltage is reduced, substantially corresponding to the period of time when both the upper and lower arm elements are off, and the amplitude of the current is also reduced.

FIG. 5 is a view illustrating an operating waveform of a voltage/current command corresponding to one phase (U-phase) according to the prior art.

Even if an ideal sine wave voltage is applied as a U-phase the voltage command Vu*, the U-phase current Iu that actually flows has a smaller amplitude than a command value Iu*. This phenomenon becomes apparent in a low speed area with a small output voltage, if a switching cycle is fixed and if the period in which both the upper and lower arm elements are off is fixed. As a result, as mentioned earlier, in FIG. 7, the current amplitude of the d-axis current Id is reduced in midway of cutoff and sticks to zero, and thereafter, the current will not even flow to the negative side.

The present invention aims at preventing the above-described phenomenon from occurring, and provides a means for sufficiently attenuating the magnetic flux when the motor stops operating.

That is, as illustrated in FIG. 2, the voltage operation part 24 according to the present invention receives the d-axis current command Id**, the q-axis current command Iq*, the d-axis flux command Phid* and the rotor frequency estimation value Fr of the induction motor as input signals, and combines them with the motor constant to obtain three-phase AC voltage commands Vu*, Vv* and Vw*.

Further, the d-axis current command Id** and the q-axis current command Iq* are subjected to coordinate transformation to obtain the three-phase AC current commands Iu*, Iv* and Iw*. Then, the three-phase AC voltage correction quantities ΔVu, ΔVv and ΔVw are calculated according to the polarities of the three-phase AC current commands Iu*, Iv* and Iw*, and the three-phase AC voltage correction quantities ΔVu, ΔVv and ΔVw are added to the three-phase AC voltage commands Vu*, Vv* and Vw*.

As an example, a calculation formula of a voltage correction quantity ΔVu in the U phase will be shown.

$$\text{If } Iu^* > 0, \Delta Vu = Ecf \cdot \Delta t/Tc$$

$$\text{If } Iu^* < 0, \Delta Vu = -Ecf \cdot \Delta t/Tc$$

wherein Ecf denotes a DC power supply voltage, $\Delta t$ denotes a period when both the upper and lower arm elements are off, and Tc denotes a switching cycle.

As described, the present invention enables to solve the above-described phenomenon (the amplitude of the actually flown U-phase current Iu becomes smaller than the command value Iu* thereof) by adding the voltage correction quantity $\Delta Vu$ to the AC the voltage command Vu* (the same applies for the remaining V-phase and W-phase).

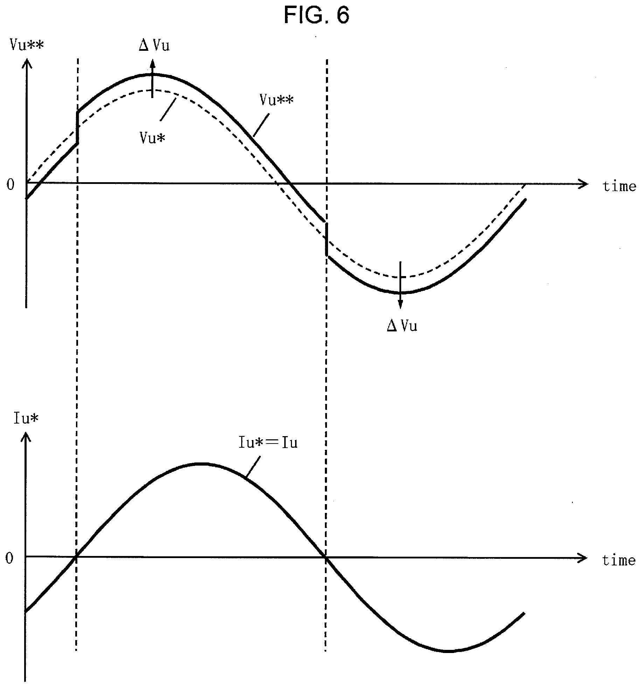

FIG. 6 is a view illustrating an operating waveform of a voltage / current command corresponding to one phase (U-phase) of the voltage operation part 24 in the control unit 14.

The U-phase voltage command Vu** (solid line of FIG. 6) moves toward the positive side in parallel for $\Delta Vu$ in the area of Iu* > 0 with respect to the original the voltage command Vu* (dotted line of FIG. 6), and moves toward the negative side in parallel for $\Delta Vu$ in the area of Iu* < 0. As a result, the actual U-phase current Iu will flow according to the command value Iu*.

Further, the present invention aims at solving the other problem related to the change of constant due to the temperature variation of the motor. In general, a resistance value of the induction motor varies due to temperature, and especially in the field of railway vehicles, the induction motor exists in an environment that may vary between a minimum temperature of -20 °C to a maximum temperature of approximately 180 °C, which is an insulation temperature of an insulator. A resistance value of a metal conductor is assumed to be substantially proportional to absolute temperature, and a resistance value at minimum temperature is reduced to approximately 60 % of the resistance value at maximum temperature. Since a residual magnetic energy of the induction motor is consumed by the resistance of the induction motor itself, the residual magnetic flux increases in a lower temperature state where the resistance value becomes small. It may be possible to adopt a method of adding a temperature sensor and a magnetic sensor to accurately comprehend the inner condition of the induction motor, but such method of adding sensors not only leads to cost up but also requires a high withstand voltage, and in a field where vibration and shock is applied to the motor, it is difficult to use sensors from the viewpoint of ensuring reliability.

The present invention utilizes the following means as measures for solving such problems.

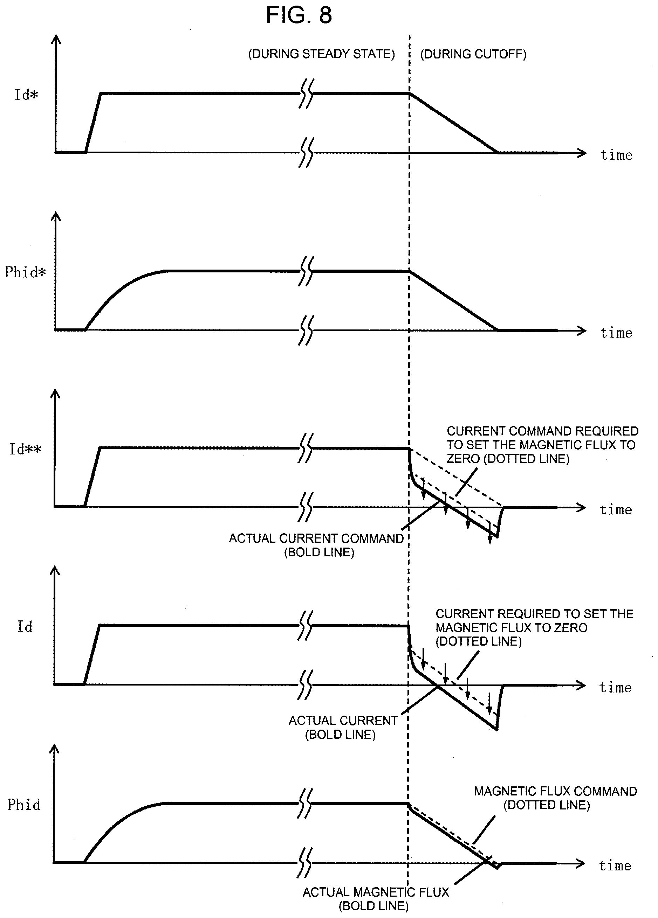

A secondary time constant of the induction motor is given as the constant K of the first gain 16 of FIG. 1. However, as mentioned earlier, the secondary time constant varies according to the temperature of the induction motor, so that the temperature that should be adopted to determine the value becomes a problem. In contrast, according to the present embodiment, the value corresponding to the minimum temperature within the operation range of the induction motor should be adopted. In fact, if the temperature of the induction motor is the minimum temperature, it means that the constant K of the first gain 16 matches the secondary time constant, so that there is no problem. On the other hand, the fact that there is no problem even if the temperature of the induction motor is higher than the minimum temperature will be described with reference to FIG. 8.

FIG. 8 is a view illustrating operating waveforms of commands and state quantities of the power conversion apparatus according to the present invention.

In FIG. 8, the induction motor temperature is a rated temperature, but the secondary time constant given as the constant K of the first gain 16 adopts the value corresponding to a minimum temperature of the induction motor. As a result, the constant K of the first gain 16 becomes an over-gain, and the d-axis current Id is flown more than necessary to the negative side (bold line portion of Id of FIG. 8). Further, the d-axis magnetic flux Phid exceeds zero and is deflected to the negative side (bold line portion of Phid of FIG. 8), and the residual magnetic flux cannot be set to zero completely. However, if the temperature of the induction motor is high, the resistance value will be high, so that a natural attenuation effect can be expected even if there is residual magnetic flux.

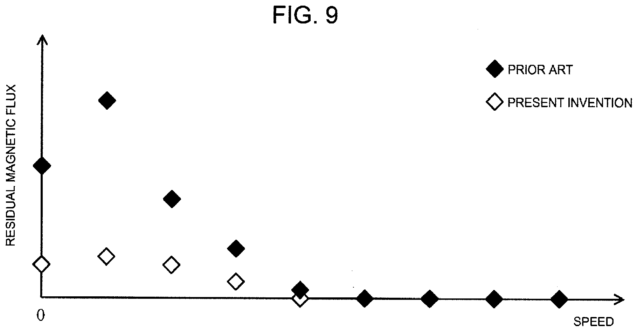

FIG. 9 is a view comparing a relationship between size of the residual magnetic flux and speed according to the prior art and the present invention. In the case of the prior art, the residual magnetic flux can be reduced to approximately zero at a certain speed or higher, but if the speed is reduced to a certain speed or lower, the residual magnetic flux is increased significantly. This is because in the low speed area, the output voltage is small, as described earlier. On the other hand, according to the present invention, the phenomenon itself of the residual magnetic flux increasing below a certain speed cannot be avoided, but the size of the residual magnetic flux can be reduced significantly compared to the prior art.

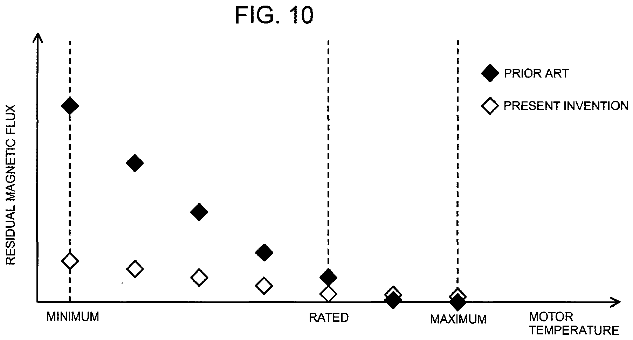

FIG. 10 is a view comparing a relationship between size of the residual magnetic flux and temperature according to the prior art and the present invention. In the prior art, the size of the residual magnetic flux will be increased suddenly as the temperature of the induction motor drops. On the other hand, according to the present invention, the phenomenon itself of the residual magnetic flux increasing as the temperature drops cannot be avoided, but the size of the residual magnetic flux can be reduced significantly compared to the prior art. In the area where the temperature is high, there may be a case where the residual magnetic flux is increased slightly compared to the prior art, but the increased quantity is very slight, and it will not have any influence.

## Claims

1. A power conversion apparatus comprising:

   a power conversion circuit (3) converting DC power into AC power to drive an induction motor (7); and
   a control unit (14) outputting a gate pulse signal (Gpu1, Gpu2; Gpv1, Gpv2; Gpw1, Gpw2) to drive the power conversion circuit;
   wherein the control unit comprises a voltage operation part (24) generating a voltage command (Vu**, Vv**, Vw**) driving the induction motor based on a current command, and a PWM operation part (25) outputting the gate pulse signal based on the voltage command, and
   during cutoff from lowering to reaching zero of an excitation current command (Id*, Id**) and a torque current command (Iq*), the control unit is configured to set an excitation current command during cutoff computed by adding an excitation current command correction quantity calculated according to a time variation of an excitation current command to the excitation current command, a magnetic flux command (Phid*) during cutoff obtained by multiplying the excitation current command by a gain, and the torque current command, as the current command with respect to the voltage operation part;
   **characterized in that**:
   the voltage operation part is configured to generate an AC voltage command (Vu*, Vu*, Vw*) from the excitation current command during cutoff, the magnetic flux command during cutoff and the torque current command, and generates an AC current command (Iu*, Iv*, Iw*) from the excitation current command during cutoff and the torque current command, and configured to generate the voltage command by moving the AC voltage command in parallel for a fixed amount to a positive side if the AC current command is positive, and moving the AC voltage command in parallel for a fixed amount to a negative side if the AC current command is negative.

2. The power conversion apparatus according to claim 1,
   wherein, during a steady state from rising of the excitation current command and the torque current command to a steady state where commands have reached a fixed value, the control unit is configured to set the excitation current command, a magnetic flux command calculated by subjecting the excitation current command to primary delay processing, and the torque current command as the current command with respect to the voltage operation part.

3. The power conversion apparatus according to claim 1 or claim 2,
wherein the excitation current command correction quantity is calculated by multiplying a time variation of the excitation current command by a secondary time constant of the induction motor, and a value corresponding to a minimum temperature during an operating temperature range of the induction motor is used as the secondary time constant.

4. The power conversion apparatus according to any one of claims 1 through 3, further comprising
   a current detection circuit (6) detecting a current flowing to the induction motor, wherein the control unit further comprises a speed estimation part (23) estimating a rotational speed of the induction motor based on a detected circuit from the current detection circuit, and
   the voltage operation part is configured to use the rotational speed for generating the voltage command.

## Patentansprüche

1. Leistungsumwandlungsvorrichtung, umfassend:

   eine Leistungsumwandlungsschaltung (3), die Gleichstrom-Leistung in Wechselstrom-Leistung umwandelt, um einen Induktionsmotor (7) anzusteuern; und
   eine Steuereinheit (14), die ein Gate-Impulssignal (Gpu1, Gpu2; Gpv1, Gpv2; Gpw1, Gpw2) ausgibt, um die Leistungsumwandlungsschaltung anzusteuern;
   wobei die Steuereinheit einen Spannungsbetriebsteil (24), der einen Spannungsbefehl (Vu**, Vv**, Vw**) erzeugt, der den Induktionsmotor basierend auf einem Strombefehl ansteuert, und einen PWM-Betriebsteil (25), der das Gate-Impulssignal basierend auf dem Spannungsbefehl ausgibt, umfasst, und
   die Steuereinheit während einer Abschaltung vom Absenken bis zum Erreichen von Null eines Erregerstrombefehls (Id*, Id**) und eines Drehmomentstrombefehls (Iq*) konfiguriert ist, um einen Erregerstrombefehl während der Abschaltung einzustellen, der berechnet wird, indem eine Erregerstrombefehlskorrekturgröße, die entsprechend einer zeitlichen Änderung eines Erregerstrombefehls berechnet wird, zu dem Erregerstrombefehl, einem Magnetflussbefehl (Phid*) während der Abschaltung, der durch Multiplikation des Erregerstrombefehls mit einer Verstärkung erhalten wird, und dem Drehmomentstrombefehl als den Strombefehl in Bezug auf den Spannungsbetriebsteil addiert werden;
   **dadurch gekennzeichnet, dass**
   der Spannungsbetriebsteil konfiguriert ist, um einen Wechselstrom-Spannungsbefehl (Vu*, Vu*, Vw*) von dem Erregerstrombefehl während der Abschaltung, dem Magnetflussbefehl während der Abschaltung und dem Drehmomentstrombefehl zu erzeugen, und einen Wechselstrom-Strombefehl (Iu*, Iv*, Iw*) von dem Erregerstrombefehl während der Abschaltung und dem Drehmomentstrombefehl erzeugt, und konfiguriert ist, den Spannungsbefehl durch Bewegen des Wechselspannungs-Spannungsbefehls um ein vorgegebenes Ausmaß parallel zu einer positiven Seite, wenn der Wechselstrombefehl positiv ist, und Bewegen des Wechselspannungsbefehls um ein vorgegebenes Ausmaß parallel zu einer negativen Seite, wenn der Wechselstrombefehl negativ ist, zu erzeugen.

2. Leistungsumwandlungsvorrichtung nach Anspruch 1, wobei während eines stationären Zustands von dem Anstieg des Erregerstrombefehls und des Drehmomentstrombefehls bis zu einem stationären Zustand, in dem Befehle einen festen Wert erreicht haben, die Steuereinheit konfiguriert ist, den Erregerstrombefehl, einen Magnetflussbefehl, der berechnet wird, indem der Erregerstrombefehl einer primären Verzögerungsverarbeitung unterzogen wird, und den Drehmomentstrombefehl als den Strombefehl in Bezug auf den Spannungsbetriebsteil einzustellen.

3. Leistungsumwandlungsvorrichtung nach Anspruch 1 oder 2, wobei die Erregerstrombefehlskorrekturgröße durch Multiplikation einer zeitlichen Änderung des Erregerstrombefehls mit einer sekundären Zeitkonstante des Induktionsmotors berechnet wird und ein Wert, der einer minimalen Temperatur während eines Betriebstemperaturbereichs des Induktionsmotors entspricht, als sekundäre Zeitkonstante verwendet wird.

4. Leistungsumwandlungsvorrichtung nach einem der Ansprüche 1 bis 3, ferner umfassend eine Stromdetektionsschaltung (6), die einen zu dem Induktionsmotor fließenden Strom detektiert, wobei die Steuereinheit ferner einen Geschwindigkeitsschätzteil (23) umfasst, der eine Umdrehungsgeschwindigkeit des Induktionsmotors basierend auf einer von der Stromdetektierschaltung detektierten Schaltung schätzt, und der Spannungsbetriebsteil so ausgebildet ist, dass sie die Umdrehungsgeschwindigkeit zur Erzeugung des Spannungsbefehls verwendet.

**Revendications**

1. Appareil de conversion de puissance comprenant :

un circuit de conversion de puissance (3) convertissant une puissance de courant continu, CC, en une puissance de courant alternatif, CA, pour entraîner un moteur à induction (7) ; et une unité de commande (14) délivrant en sortie un signal d'impulsion de gâchette (Gpu1, Gpu2 ; Gpv1, Gpv2 ; Gpw1, Gpw2) pour entraîner le circuit de conversion de puissance ;
dans lequel l'unité de commande comprend une partie de fonctionnement à tension (24) générant une instruction de tension (Vu**, Vv**, Vw**) entraînant le moteur à induction sur la base d'une instruction de courant, et une partie de fonctionnement de PWM (25) délivrant en sortie le signal d'impulsion de gâchette sur la base de l'instruction de tension, et
lors d'une coupure d'un abaissement pour atteindre zéro d'une instruction de courant d'excitation (Id*, Id**) et d'une instruction de courant de couple (Iq*), l'unité de commande est configurée pour régler une instruction de courant d'excitation pendant la coupure calculée en ajoutant une quantité de correction d'instruction de courant d'excitation calculée en fonction d'une variation temporelle d'une instruction de courant d'excitation à l'instruction de courant d'excitation, une commande de flux magnétique (Phid*) pendant la coupure obtenue en multipliant l'instruction de courant d'excitation par un gain, et l'instruction de courant de couple, en tant qu'instruction de courant par rapport à la partie de fonctionnement à tension ;
**caractérisé en ce que** :
la partie de fonctionnement à tension est configurée pour générer une instruction de tension CA (Vu*, Vu*, Vw*) à partir de l'instruction de courant d'excitation pendant la coupure, l'instruction de flux magnétique pendant la coupure et l'instruction de courant de couple, et génère une instruction de courant CA (Iu*, Iv*, Iw*) à partir de l'instruction de courant d'excitation pendant la coupure et de l'instruction de courant de couple, et est configurée pour générer l'instruction de tension en déplaçant l'instruction de tension CA en parallèle pour une quantité fixe vers un côté positif si l'instruction de courant CA est positive, et déplacer l'instruction de tension CA en parallèle pour une quantité fixe vers un côté négatif si l'instruction de courant CA est négative.

2. Appareil de conversion de puissance selon la revendication 1,
dans lequel, pendant un état stable depuis l'augmentation de l'instruction de courant d'excitation et de l'instruction de courant de couple jusqu'à un état stable où les instructions ont atteint une valeur fixe, l'unité de commande est configurée pour régler l'instruction de courant d'excitation, une instruction de flux magnétique calculée en soumettant l'instruction de courant d'excitation à un traitement de retard primaire, et l'instruction de courant de couple en tant qu'instruction de courant par rapport à la partie de fonctionnement à tension.

**3.** Appareil de conversion de puissance selon la revendication 1 ou la revendication 2, dans lequel la quantité de correction d'instruction de courant d'excitation est calculée en multipliant une variation temporelle de l'instruction de courant d'excitation par une constante de temps secondaire du moteur à induction, et une valeur correspondant à une température minimum pendant une plage de température de fonctionnement du moteur à induction est utilisée en tant que constante de temps secondaire.

**4.** Appareil de conversion de puissance selon l'une quelconque des revendications 1 à 3, comprenant en outre un circuit de détection de courant (6) détectant un courant circulant vers le moteur à induction, dans lequel l'unité de commande comprend en outre une partie d'estimation de vitesse (23) estimant une vitesse de rotation du moteur à induction sur la base d'un circuit détecté à partir du circuit de détection de courant, et la partie de fonctionnement à tension est configurée pour utiliser la vitesse de rotation pour générer l'instruction de tension.

# FIG. 1

EP 3 160 036 B1

# FIG. 2

FIG. 3

(DURING STEADY STATE) | (DURING CUTOFF)

Id*

time

Iq*

time

Id**

time

Phid*

time

FIG. 4

| | UPPER ARM ELEMENT: ON<br>LOWER ARM ELEMENT: OFF | UPPER/LOWER ARM ELEMENTS: OFF | UPPER ARM ELEMENT: OFF<br>LOWER ARM ELEMENT: ON |
|---|---|---|---|
| WHEN CURRENT POLARITY IS POSITIVE | | | |
| WHEN CURRENT POLARITY IS NEGATIVE | | | |

# FIG. 5

# FIG. 6

# FIG. 7

Id*

(DURING STEADY STATE)    (DURING CUTOFF)

time

Phid*

time

Id

IF SPEED IS HIGH
(DOTTED LINE)

time

IF SPEED IS LOW (BOLD LINE)

Phid

IF SPEED IS LOW (BOLD LINE)

time

IF SPEED IS HIGH (DOTTED LINE)

# FIG. 8

(DURING STEADY STATE)  (DURING CUTOFF)

Id*

time

Phid*

time

Id**

CURRENT COMMAND REQUIRED
TO SET THE MAGNETIC FLUX TO
ZERO (DOTTED LINE)

ACTUAL CURRENT COMMAND
(BOLD LINE)

time

Id

CURRENT REQUIRED TO SET THE
MAGNETIC FLUX TO ZERO
(DOTTED LINE)

ACTUAL CURRENT
(BOLD LINE)

time

Phid

MAGNETIC FLUX COMMAND
(DOTTED LINE)

ACTUAL MAGNETIC FLUX
(BOLD LINE)

time

# FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013207954 A

- JP 2008113501 A

**Non-patent literature cited in the description**

- **JIANG ; HOLTZ.** *IEEE Trans. Indust. Applic.,* 2001, vol. 37 (5), 1299-1307